# EUROPEAN PATENT APPLICATION

(11) **EP 4 848 598 A1**
(43) Date of publication of application: **02.12.2026**
(21) Application number: 25762377.7
(22) Date of filing: 26.02.2025
(51) Int. Cl.: H04B 1/50, H04B 1/401, H04L 5/00, H04B 1/00, H04B 7/06, H04B 1/04

(54) **RADIO FREQUENCY FRONT END MODULE AND ELECTRONIC DEVICE INCLUDING SAME**

(30) Priority: 29.02.2024 KR 20240030343; 09.04.2024 KR 20240048359
(71) Applicant: Samsung Electronics Co., Ltd., Suwon-si, Gyeonggi-do 16677 (KR)
(72) Inventor: KANG, Hyunsang, Suwon-si Gyeonggi-do 16677 (KR); NA, Hyoseok, Suwon-si Gyeonggi-do 16677 (KR); MOON, Yohan, Suwon-si Gyeonggi-do 16677 (KR); VAN, Juho, Suwon-si Gyeonggi-do 16677 (KR)
(74) Representative: Gulde & Partner
(86) International application number: PCT/KR2025/002701
(87) International publication number: WO 2025/183460

(57) **Abstract**

In embodiments of the present disclosure, an electronic device may comprise: a processor including a processing circuit; a radio frequency (RF) transceiver connected to the processor; a radio frequency front end (RFFE) module connected to the RF transceiver; and a plurality of antennas including a first antenna and a second antenna connected to the RFFE module. The RFFE module may comprise: a first power amplifier for a first frequency range; a second power amplifier for a second frequency range higher than the first frequency range; a third power amplifier for a third frequency range higher than the second frequency range; an antenna switching circuit; a first diplexer connected to the antenna switching circuit; and a second diplexer connected to the antenna switching circuit.

## Description

### [Technical Field]

The following descriptions relate to a radio frequency front end module and an electronic device including the radio frequency front end module.

### [Background Art]

An electronic device may include radio frequency front end (RFFE) modules to transmit or receive a signal. For example, an RFFE module may include a power amplifier (PA) for transmit power of a signal to be transmitted through an antenna connected to the RFFE module.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments of the present disclosure, an electronic device is provided. The electronic device may comprise a processor comprising processing circuitry, a radio frequency (RF) transceiver connected to the processor, a radio frequency front end (RFFE) module connected to the RF transceiver, and a plurality of antennas including a first antenna and a second antenna connected to the RFFE module. The RFFE module may include a first power amplifier for a first frequency range, a second power amplifier for a second frequency range higher than the first frequency range, a third power amplifier for a third frequency range higher than the second frequency range, a first signal path connected to the first power amplifier and including first filter circuitry for a first frequency band in the first frequency range, a second signal path connected to the second power amplifier and including second filter circuitry for a second frequency band in the second frequency range, a third signal path connected to the third power amplifier and including third filter circuitry for a third frequency band in the third frequency range, antenna switching circuitry connected to the first signal path, the second signal path, and the third signal path, a first diplexer connected to the antenna switching circuitry, and a second diplexer connected to the antenna switching circuitry. The first diplexer may comprise a first filter configured to pass signals in the first frequency range and a second filter configured to pass signals in the second frequency range. The second diplexer may comprise a third filter configured to pass signals in the second frequency range and a fourth filter configured to pass signals in the third frequency range.

In embodiments of the present disclosure, a radio frequency front end (RFFE) module is provided. The RFFE module may comprise a first power amplifier for a first frequency range, a second power amplifier for a second frequency range higher than the first frequency range, a third power amplifier for a third frequency range higher than the second frequency range, a first signal path connected to the first power amplifier and including first filter circuitry for a first frequency band in the first frequency range, a second signal path connected to the second power amplifier and including second filter circuitry for a second frequency band in the second frequency range, a third signal path connected to the third power amplifier and including third filter circuitry for a third frequency band in the third frequency range, antenna switching circuitry connected to the first signal path, the second signal path, and the third signal path, a first diplexer connected to the antenna switching circuitry, and a second diplexer connected to the antenna switching circuitry. The first diplexer may comprise a first filter configured to pass signals in the first frequency range and a second filter configured to pass signals in the second frequency range. The second diplexer may comprise a third filter configured to pass signals in the second frequency range and a fourth filter configured to pass signals in the third frequency range.

### [Description of the Drawings]

FIG. 1 is a block diagram of an electronic device in a network environment.
FIG. 2 illustrates an example of an electronic device including a radio frequency front end (RFFE) module.
FIG. 3 is a diagram for explaining a frequency band.
FIGS. 4A and 4B illustrate insertion loss characteristics of a diplexer according to a frequency.
FIG. 5 illustrates an example of an RFFE module including a diplexer.
FIG. 6 illustrates an example of an RFFE module including a diplexer.
FIG. 7 illustrates an example of an RFFE module including a diplexer.
FIG. 8 illustrates an example of an RFFE module including a diplexer.
FIG. 9 illustrates an example of an RFFE module including a diplexer.
FIGS. 10A to 10C illustrate examples of antenna switching circuitry for carrier aggregation (CA).

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to parts of an electronic device (e.g., a communication module, a wireless communication module, a substrate, a printed circuit board (PCB), a flexible PCB (FPCB), a module, an antenna, an antenna element, circuitry, a processor, a chip, a component, or a device), terms referring to RF-related parts (a front end module (FEM), a power amplifier module (PAM), a FEM including duplexer (FEMid), a power amplifier module including duplexer (PAMid), a low noise amplifier PAM including duplexer (LPAMid), a radio frequency front end (RFFE), or a radio frequency integrated circuit (RFIC)), terms referring to a shape of a part (e.g., a structure, a structural body, a support portion, a contact portion, or a protruding portion), terms referring to a connection portion between structures (e.g., a connection portion, a contact portion, a support portion, a contact structure, a conductive member, or an assembly), terms referring to circuitry (e.g., a PCB, an FPCB, a signal line, a feeding line, a data line, an RF signal line, an antenna line, a signal path, an RF path, an RF module, RF circuitry, a splitter, a divider, a coupler, or a combiner), and the like used in the following description are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

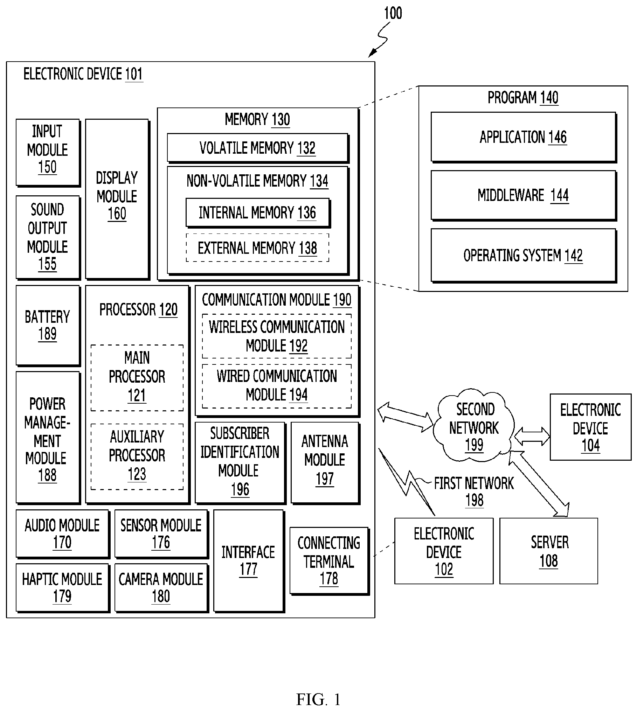

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

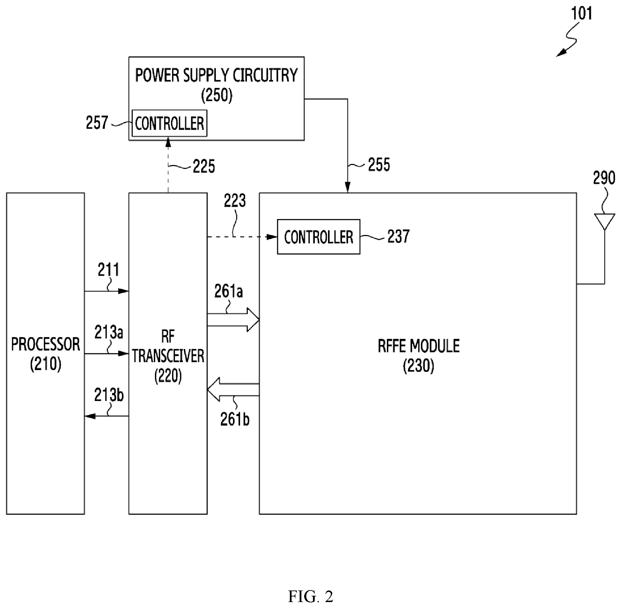

FIG. 2 illustrates an example of an electronic device (e.g., the electronic device 101) including a radio frequency front end (RFFE) module.

Referring to FIG. 2, the electronic device 101 may include a processor 210, an RF transceiver 220, a radio frequency front end (RFFE) module 230, power supply circuitry 250 (e.g., a modulator), and/or an antenna 290. The electronic device 101 may include the processor 210. The processor 210 may include, for example, at least one of an application processor (AP) (e.g., the main processor 121 of FIG. 1) or a communication processor (CP) (e.g., the auxiliary processor 123 of FIG. 1). For example, the processor 210 may include the AP and the CP. For example, the processor may include the AP. For example, the processor 210 may include the CP. The processor 210 may control the RF transceiver 220 through a control interface 211. For example, the processor 210 may generate a baseband signal. The processor 210 may control the RF transceiver 220 to process the generated baseband signal. The processor 210 may transmit a signal 213a (e.g., analog data or digital data). For example, the signal 213a may be a communication signal to be delivered to an external electronic device (e.g., a base station, a satellite, a terminal, the electronic device 102, the electronic device 104, or the server 108). The processor 210 may control the RF transceiver 220 such that the signal is transmitted through the antenna 290. The processor 210 may receive a signal 213b (e.g., analog data or digital data). For example, the signal 213b may be a signal received from an external electronic device (e.g., a base station, a satellite, a terminal, the electronic device 102, the electronic device 104, or the server 108) through the antenna 290. For another example, the signal 213b may include a signal (e.g., a feedback signal) for measurement of transmit power. The processor 210 may control the RF transceiver 220 such that the signal 213b is received. For example, through one port (e.g., a feedback receive port (FBRX)) of the RF transceiver 220, the processor 210 may obtain the feedback signal.

The electronic device 101 may include the RF transceiver 220. For example, the RF transceiver 220 may be implemented as a single chip (e.g., an RFIC chip) or a portion of a single package. The RF transceiver 220 may include a digital to analog converter (DAC) for converting a digital signal into an analog signal. The RF transceiver 220 may include a mixer and an oscillator (e.g., a local oscillator (LO)) for up-conversion. The RF transceiver 220 may convert a baseband signal generated by the processor 210 into an RF signal. For example, the RF transceiver 220 may provide an RF transmission signal 261a to the RFFE module 230. The RF transceiver 220 may include an analog to digital converter (ADC) for converting an analog signal into a digital signal. The RF transceiver 220 may include a mixer and an oscillator for down-conversion. The RF transceiver 220 may convert an RF signal received from the antenna 290 into a baseband signal so as to be processed by the processor 210. For example, the RFFE module 230 may provide an RF reception signal 261b to the RF transceiver 220. The RF transceiver 220 may include one or more transmission ports. The RF transceiver 220 may include one or more reception ports. Although not illustrated in FIG. 2, the RF transceiver 220 may receive a feedback signal provided from a component (e.g., a coupler 235) of the RFFE module 230 electrically connected to the antenna 290. For example, the RF transceiver 220 may include a feedback receive port (FBRX) for the feedback signal. The RF transceiver 220 may control at least a portion of the RFFE module 230 through a control interface 223 (e.g., a mobile industry processor interface (MIPI)). For example, the RF transceiver 220 may transmit a control signal to a controller 237 of the RFFE module 230 through the control interface 223. The RF transceiver 220 may control at least a portion of the power supply circuitry 250 through a control interface 225 (e.g., a MIPI). For example, the RF transceiver 220 may transmit a control signal to a controller 257 of the power supply circuitry 250 through the control interface 225.

The electronic device 101 may include the RFFE module 230. A wireless communication system is developing in a direction for supporting a higher data transmission rate to meet continuously increasing traffic demand for wireless data. In order to support various frequency combinations, components of a plurality of transmit (TX)/receive (RX) modules (e.g., the RFFE module 230) connected to the RF transceiver 220 may be disposed. For example, the RFFE module 230 may include the controller 237. The controller 237 may be configured to control components of the RFFE module 230 through a control interface (e.g., the control interface 223) with the processor 210 and/or the RF transceiver 220. The RFFE module 230 may include a power amplifier (PA) for transmission. For example, the RFFE module 230 may be a PAMid including the power amplifier and RF components (e.g., a duplexer, a filter, or a switch) for transmission signal processing. For example, the RFFE module 230 may be an LPAMid including the power amplifier and a low noise amplifier (LNA). The RFFE module 230 may be configured to transmit a transmission signal (e.g., the RF transmission signal 261a) from the RF transceiver 220 to the antenna 290. The RF transmission signal 261a from the RF transceiver 220 may be amplified by the power amplifier. The amplified RF signal may be radiated into the air through the antenna 290. The RFFE module 230 may include components for a reception path in addition to components for a transmission path. The RFFE module 230 may include a low noise amplifier (LNA) for reception. The RFFE module 230 may be configured to process a signal received through the antenna 290 and transmit the processed signal (e.g., the RF reception signal 261b) to the RF transceiver 220.

For power supply to components in the RFFE module 230, the electronic device 101 may include the power supply circuitry 250. The power supply circuitry 250 may be configured to provide a supply voltage 255 (V_{cc}) to the power amplifier of the RFFE module 230. The power supply circuitry 250 may generate the supply voltage 255. In order to generate the supply voltage 255, the power supply circuitry 250 may include at least one circuitry (e.g., buck converter circuitry or boost converter circuitry) for DC-DC converting. For example, the power supply circuitry 250 may provide the supply voltage 255 to the power amplifier of the RFFE module 230 based on average power tracking (APT). For example, the power supply circuitry 250 may provide the supply voltage 255 to the power amplifier of the RFFE module 230 based on envelope tracking (ET). As a term indicating a voltage (e.g., the supply voltage 255) applied to the power amplifier of the RFFE module 230, in addition to a supply voltage, supply power, amplifier power, an operating voltage for a power amplifier, operating power, and/or power amplifier power, and/or terms having a technical and/or functional meaning equivalent thereto may be used.

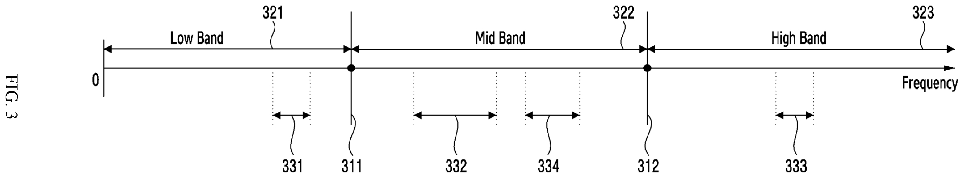

FIG. 3 is a diagram for explaining a frequency band. The frequency band indicates a certain frequency region in a frequency domain. For wireless communication, the electronic device 101 may support various types of frequency bands, and components of an RFFE module (e.g., the RFFE module 230) for signal processing of a frequency band may vary according to the frequency band.

Referring to FIG. 3, a frequency spectrum may include a first frequency range 321, a second frequency range 322, and/or a third frequency range 323. For example, the first frequency range 321 may be a region including frequencies lower than a first reference value 311 in a frequency domain. For example, the second frequency range 322 may be a region including frequencies higher than or equal to the first reference value 311 and lower than a second reference value 312. The second frequency range 322 may be higher than the first frequency range 321. Frequency bands in the second frequency range 322 may be higher than frequency bands in the first frequency range 321. For example, the third frequency range 323 may be a region including frequencies higher than or equal to the second reference value 312. The third frequency range 323 may be higher than the second frequency range 322. Frequency bands in the third frequency range 323 may be higher than frequency bands in the second frequency range 322.

According to an embodiment, the first frequency range 321 may be a low-band (LB). As an example, the first frequency range 321 may indicate a frequency range lower than about 1 GHz. The first frequency range 321 may include one or more low frequency bands (e.g., a first frequency band 331). The electronic device 101 may transmit or receive signals on one frequency band among the one or more low frequency bands. For example, the one or more low frequency bands may include a B5 band (frequency division duplex (FDD), DL: 869 MHz-894 MHz, UL: 824 MHz-849 MHz), a B8 band (FDD, DL: 925 MHz-960 MHz, UL: 880 MHz-915 MHz), or a B26 band (FDD, DL: 859 MHz-894 MHz, UL: 814 MHz-849 MHz). As a non-limiting example, according to a supported radio access technology (e.g., NR), the terms B5, B8, and B26, which are names referring to frequency bands, may be replaced with and used as n5, n8, and n26.

According to an embodiment, the second frequency range 322 may be a mid-band (MB). As an example, the second frequency range 322 may indicate a frequency range higher than or equal to about 1 GHz and lower than about 2.3 GHz. The second frequency range 322 may include one or more middle frequency bands (e.g., a second frequency band 332 or a fourth frequency band 334). The electronic device 101 may transmit or receive signals on one frequency band among the one or more middle frequency bands. For example, the one or more middle frequency bands may include a B1 band (FDD, DL: 2110 MHz-2170 MHz, UL: 1920 MHz-1980 MHz), a B3 band (FDD, DL: 1805 MHz-1880 MHz, UL: 1710 MHz-1785 MHz), a B34 band (time division duplex (TDD), 2010 MHz-2025 MHz), or a B39 band (TDD, 1880 MHz-1920 MHz). As a non-limiting example, according to a supported radio access technology (e.g., NR), terms such as B1, B3, B34, and B39, which are names referring to frequency bands, may be replaced with and used as n1, n3, n34, and n39.

According to an embodiment, the third frequency range 323 may be a high-band (HB). As an example, the third frequency range 323 may indicate a frequency range higher than or equal to about 2.3 GHz. The third frequency range 323 may include one or more high frequency bands (e.g., a third frequency band 333). The electronic device 101 may transmit or receive signals on one frequency band among the one or more high frequency bands. For example, the one or more high frequency bands may include a B7 band (FDD, DL: 2620 MHz-2690 MHz, UL: 2500 MHz-2570 MHz), a B40 band (TDD, 2300 MHz-2400 MHz), or a B41 band (TDD, 2496 MHz-2690 MHz). As a non-limiting example, according to a supported radio access technology (e.g., NR), terms such as B7, B40, and B41, which are names referring to frequency bands, may be replaced with and used as n7, n40, and n41.

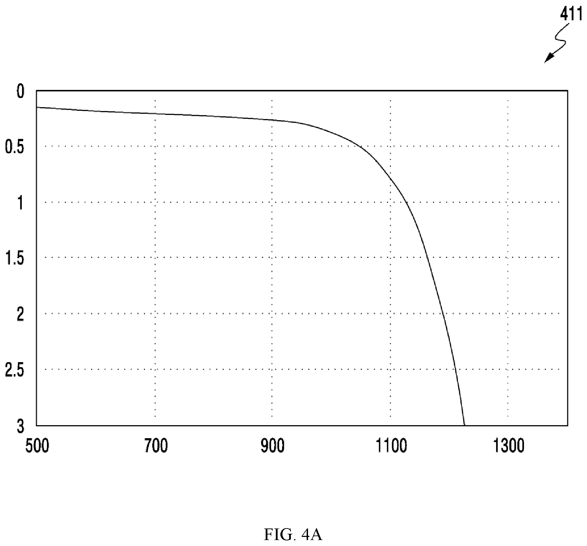

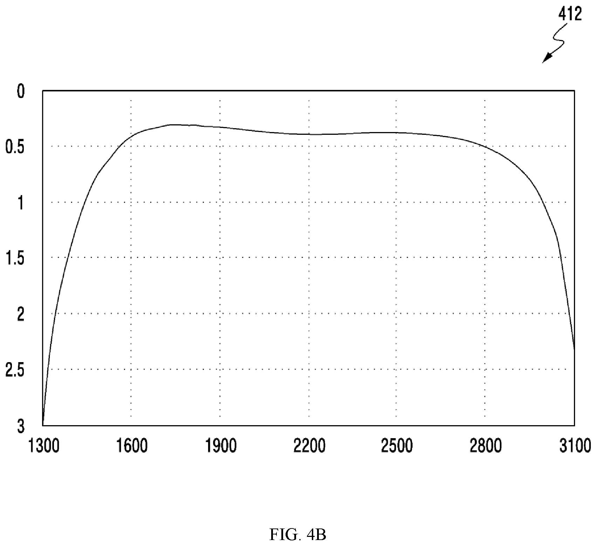

FIGS. 4A and 4B illustrate insertion loss characteristics of a diplexer according to a frequency. Insertion loss indicates an amount of loss for a signal passing through a filter at a specified frequency. A graph indicates that a signal passes better as insertion loss becomes smaller.

Referring to FIG. 4A, a graph 411 represents insertion loss of a first port of a diplexer. The first port may be configured to pass a frequency lower than a first specified frequency. A horizontal axis of the graph 411 represents a frequency (unit: megahertz (MHz)), and a vertical axis of the graph 411 represents insertion loss (unit: decibel (dB)). Referring to the graph 411, a portion connected to the first port in the diplexer may function as a filter (e.g., an LPF) for harmonic removal. According to an embodiment, in a case that a diplexer is disposed in an RFFE module (e.g., the RFFE module 230), a separate filter (e.g., an LPF) for harmonic removal may be omitted in the RFFE module.

Referring to FIG. 4B, a graph 412 represents a characteristic of a second port of the diplexer. The second port may be configured to pass a frequency higher than or equal to a second specified frequency. A vertical axis of the graph 412 represents a frequency (unit: MHz), and a vertical axis of the graph 412 represents insertion loss (unit: dB). Referring to the graph 412, a portion connected to the second port in the diplexer may function as a band pass filter (BPF). As the diplexer does not pass a frequency having a certain magnitude or greater, harmonic components at a high frequency may be reduced and/or removed through the diplexer. According to an embodiment, in a case that a diplexer is disposed in an RFFE module (e.g., the RFFE module 230), a separate filter (e.g., an LPF) for harmonic removal may be omitted in the RFFE module.

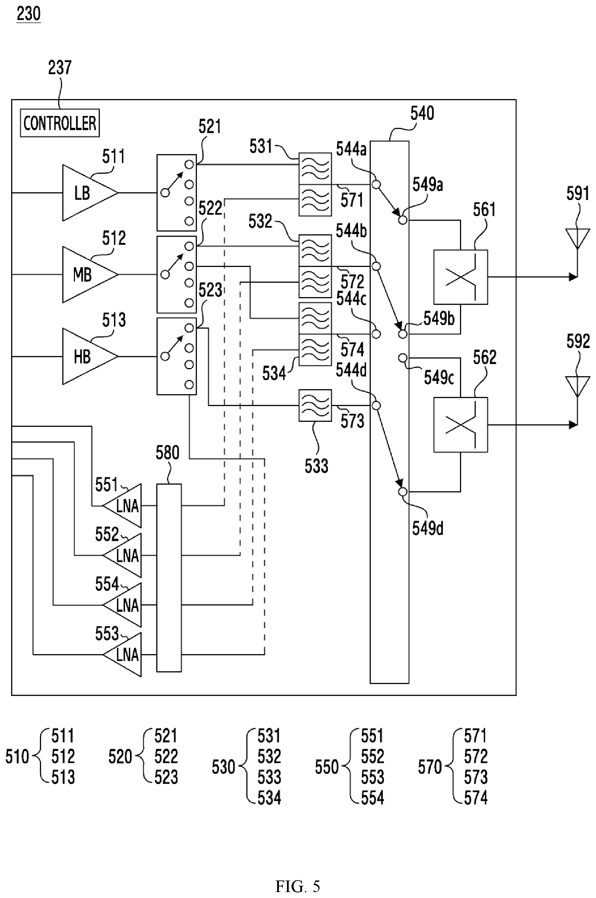

FIG. 5 illustrates an example of an RFFE module (e.g., the RFFE module 230) including a diplexer.

Referring to FIG. 5, the RFFE module 230 may include power amplifiers 510. Since requirements for amplification of a signal may vary according to a frequency range, the RFFE module 230 may include a power amplifier for each frequency range. For example, the RFFE module 230 may include a first power amplifier 511 for a first frequency range (e.g., the first frequency range 321, LB), a second power amplifier 512 for a second frequency range (e.g., the second frequency range 322, MB), and a third power amplifier 513 for a third frequency range (e.g., the third frequency range 323, HB).

The RFFE module 230 may include transmission switches 520. For example, the RFFE module 230 may include a first transmission switch 521. The electronic device 101 may support one or more low frequency bands of the first frequency range. In order to select a specific frequency band (e.g., the first frequency band 331) from among the one or more low frequency bands, the first transmission switch 521 may be used. The first transmission switch 521 may be used to select a path for the specific frequency band of the first frequency range. The electronic device 101 may control the first transmission switch 521 connected to the first power amplifier 511 to select the path for the specific frequency band according to control of the processor 210 and/or the RF transceiver 220. For example, the RFFE module 230 may include a second transmission switch 522. The electronic device 101 may support one or more middle frequency bands of the second frequency range. In order to select a specific frequency band (e.g., the second frequency band 332) from among the one or more middle frequency bands, the second transmission switch 522 may be used. The second transmission switch 522 may be used to select a path for the specific frequency band of the second frequency range. The electronic device 101 may control the second transmission switch 522 connected to the second power amplifier 512 to select the path for the specific frequency band according to control of the processor 210 and/or the RF transceiver 220. For example, the RFFE module 230 may include a third transmission switch 523. The electronic device 101 may support one or more high frequency bands of the third frequency range. In order to select a specific frequency band (e.g., the third frequency band 333) from among the one or more high frequency bands, the third transmission switch 523 may be used. The third transmission switch 523 may be used to select a path for the specific frequency band of the third frequency range. The electronic device 101 may control the third transmission switch 523 connected to the third power amplifier 513 to select the path for the specific frequency band according to control of the processor 210 and/or the RF transceiver 220.

The RFFE module 230 may include filter circuitries 530. For example, the RFFE module 230 may include first filter circuitry 531. The first filter circuitry 531 may be used to pass signals in a first frequency band (e.g., the first frequency band 331) of the first frequency range 321. As an example, the first frequency band may correspond to FDD, and the first filter circuitry 531 may include a duplexer for distinguishing a transmission frequency and a reception frequency. For example, the RFFE module 230 may include second filter circuitry 532. The second filter circuitry 532 may be used to pass signals in a second frequency band (e.g., the second frequency band 332) of the second frequency range 322. As an example, the second frequency band may correspond to FDD, and the second filter circuitry 532 may include a duplexer for distinguishing a transmission frequency and a reception frequency. For example, the RFFE module 230 may include third filter circuitry 533. The third filter circuitry 533 may be used to pass signals in a third frequency band (e.g., the third frequency band 333) of the third frequency range 323. As an example, the third frequency band may correspond to TDD, and the third filter circuitry 533 may include a band pass filter for a TDD frequency band. For example, the RFFE module 230 may include fourth filter circuitry 534. The fourth filter circuitry 534 may be used to pass signals in a fourth frequency band (e.g., the fourth frequency band 334) of the second frequency range 322. As an example, the fourth frequency band may correspond to FDD, and the fourth filter circuitry 532 may include a duplexer for distinguishing a transmission frequency and a reception frequency.

The RFFE module 230 may include signal paths 570. For example, the signal paths 570 may include a first signal path 571 including the first filter circuitry 531, a second signal path 572 including the second filter circuitry 532, a third signal path 573 including the third filter circuitry 533, and/or a fourth signal path 574 including the fourth filter circuitry 534. Hereinafter, in the present disclosure, a signal path may be understood as including a transmission path and a reception path.

The RFFE module 230 may include components for a reception path, in addition to components for transmission (e.g., a power amplifier or a transmission switch). The RFFE module 230 may include low noise amplifiers 550. For example, the RFFE module 230 may include a first low noise amplifier 551, a second low noise amplifier 552, a third low noise amplifier 553, and/or a fourth low noise amplifier 554. The RFFE module 230 may include a reception switch 580 for electrically connecting each low noise amplifier and filter circuitry. For example, the first low noise amplifier 551 may be electrically connected to the first filter circuitry 531 through the reception switch 580. The first low noise amplifier 551 may be configured to amplify signals received in the first frequency band. For example, the second low noise amplifier 552 may be electrically connected to the second filter circuitry 532 through the reception switch 580. The second low noise amplifier 552 may be configured to amplify signals received in the second frequency band. For example, the third low noise amplifier 553 may be electrically connected to the third filter circuitry 533 through the reception switch 580. The third low noise amplifier 553 may be configured to amplify signals received in the third frequency band. For example, the fourth low noise amplifier 554 may be electrically connected to the fourth filter circuitry 534 through the reception switch 580. The fourth low noise amplifier 554 may be configured to amplify signals received in the fourth frequency band.

The RFFE module 230 may include antenna switching circuitry 540. The antenna switching circuitry 540 may be connected to the signal paths 570. The antenna switching circuitry 540 may include a plurality of poles and a plurality of throws. For example, the antenna switching circuitry 540 may include a first pole 544a, a second pole 544b, a third pole 544c, and/or a fourth pole 544d. The antenna switching circuitry 540 may include a first throw 549a, a second throw 549b, a third throw 549c, and/or a fourth throw 549d. A pole of the antenna switching circuitry 540 may be electrically connected to a signal path, and a throw of the antenna switching circuitry 540 may be electrically connected to an antenna. The first pole 544a of the antenna switching circuitry 540 may be connected to the first signal path 571. The second pole 544b of the antenna switching circuitry 540 may be connected to the second signal path 572. The third pole 544c of the antenna switching circuitry 540 may be connected to the fourth signal path 574. The fourth pole 544d of the antenna switching circuitry 540 may be connected to the third signal path 573. According to an embodiment, a diplexer (e.g., a first diplexer 561 or a second diplexer 562) may be used for an electrical connection between a throw of the antenna switching circuitry 540 and an antenna.

According to an embodiment, the RFFE module 230 may include diplexers. As the diplexers are positioned in the RFFE module 230, a separate filter for removing a harmonic component may be omitted in the RFFE module 230. For example, the RFFE module 230 may include the first diplexer 561. The first diplexer 561 may be configured to distinguish signals in the first frequency range (e.g., the first frequency range 321, LB) and signals in the second frequency range (e.g., the second frequency range 322, MB). For example, one end (or which may be referred to as a first port or a low port) of the first diplexer 561 may be configured to pass signals in a frequency band of the first frequency range, and another end (or which may be referred to as a second port or a high port) of the first diplexer 561 may be configured to pass signals in a frequency band of the second frequency range. As an example, the first diplexer 561 may include a first filter configured to pass signals in the frequency band of the first frequency range and a second filter configured to pass signals in the frequency band of the second frequency range. The second diplexer 562 may be configured to distinguish signals in the second frequency range (e.g., the second frequency range 322, MB) and signals in the third frequency range (e.g., the third frequency range 323, HB). For example, one end (or which may be referred to as a first port or a low port) of the second diplexer 562 may be configured to pass signals in a frequency band of the second frequency range, and another end (or which may be referred to as a second port or a high port) of the second diplexer 562 may be configured to pass signals in a frequency band of the third frequency range. As an example, the second diplexer 562 may include a third filter configured to pass signals in the frequency band of the second frequency range and a fourth filter configured to pass signals in the frequency band of the third frequency range. The first throw 549a of the antenna switching circuitry 540 may be connected to the one end of the first diplexer 561. The second throw 549b of the antenna switching circuitry 540 may be connected to the another end of the first diplexer 561. The third throw 549c of the antenna switching circuitry 540 may be connected to the one end of the second diplexer 562. The fourth throw 549d of the antenna switching circuitry 540 may be connected to the another end of the second diplexer 562.

According to an embodiment, a diplexer may be used to separate signals in different frequency ranges. For example, the first diplexer 561 may include a first port, a second port, and a third port. The first port and the second port may be connected to the antenna switching circuitry 540. The third port may be connected to an antenna (e.g., a first antenna 591). The first diplexer 561 may separate RF signals received through the antenna into signals in the first frequency range (e.g., the first frequency range 321, LB) and signals in the second frequency range (e.g., the second frequency range 322, MB). The first diplexer 561 may be configured to separate the signals in the first frequency range from the RF signals and provide the signals in the first frequency range to the first port. The first diplexer 561 may be configured to separate the signals in the second frequency range from the RF signals and provide the signals in the second frequency range to the second port. The first diplexer 561 may be used as a transmission path in addition to separation of a reception path. The first diplexer 561 may be configured to deliver the signals in the first frequency range provided from the first port to the antenna through the third port. The first diplexer 561 may be configured to deliver the signals in the second frequency range provided from the second port to the antenna through the third port. For example, the second diplexer 562 may include a first port, a second port, and a third port. The first port and the second port may be connected to the antenna switching circuitry 540. The third port may be connected to an antenna (e.g., a second antenna 592). The second diplexer 562 may separate RF signals received through the antenna into signals in the second frequency range (e.g., the second frequency range 322, MB) and signals in the third frequency range (e.g., the third frequency range 323, HB). The second diplexer 562 may be configured to separate the signals in the second frequency range from the RF signals and provide the signals in the second frequency range to the first port. The second diplexer 562 may be configured to separate the signals in the third frequency range from the RF signals and provide the signals in the third frequency range to the second port. The second diplexer 562 may be used as a transmission path in addition to separation of a reception path. The second diplexer 562 may be configured to deliver the signals in the second frequency range provided from the first port to the antenna through the third port. The second diplexer 562 may be configured to deliver the signals in the third frequency range provided from the second port to the antenna through the third port.

According to an embodiment, a diplexer may be used to pass signals in a specified frequency range. For example, the first diplexer 561 may be configured to pass the signals in the first frequency range (e.g., the first frequency range 321, LB). The first diplexer 561 may be configured to pass the signals in the second frequency range (e.g., the second frequency range 322, MB). As an example, the first diplexer 561 may include a filter (e.g., an LPF) configured to pass the signals in the first frequency range and a filter (e.g., a BPF or an HPF) configured to pass the signals in the second frequency range. The filter (e.g., the LPF) configured to pass the signals in the first frequency range may be configured to pass signals having a frequency lower than a reference frequency. The reference frequency may be higher than the highest frequency among frequency bands in the first frequency range supported by the RFFE module 230. The filter (e.g., the BPF or the HPF) configured to pass the signals in the second frequency range may be configured to pass signals having a frequency higher than or equal to the reference frequency. The reference frequency may be lower than the lowest frequency among frequency bands in the second frequency range supported by the RFFE module 230.

The first diplexer 561 may include the first port, the second port, and the third port. The filter configured to pass the signals in the first frequency range may be connected to the first port, and the filter configured to pass the signals in the second frequency range may be connected to the second port. The first port and the second port may be connected to the antenna switching circuitry 540. The third port may be connected to the antenna (e.g., the first antenna 591). The first diplexer 561 may filter for the signals in the first frequency range (e.g., the first frequency range 321, LB) from RF signals received through the antenna. The first diplexer 561 may filter for the signals in the second frequency range (e.g., the second frequency range 322, MB) from RF signals received through the antenna. The first diplexer 561 may be used as a transmission path in addition to separation of a reception path. The first diplexer 561 may be configured to filter for the signals in the first frequency range from signals provided from the first port and deliver the signals in the first frequency range to the antenna through the third port. The first diplexer 561 may be configured to filter for the signals in the second frequency range from signals provided from the second port and deliver the signals in the second frequency range to the antenna through the third port.

For example, the second diplexer 562 may be configured to pass the signals in the second frequency range (e.g., the second frequency range 322, MB). The second diplexer 562 may be configured to pass the signals in the second frequency range (e.g., the third frequency range 323, HB). As an example, the second diplexer 562 may include a filter (e.g., an LPF) configured to pass the signals in the second frequency range and a filter (e.g., a BPF or an HPF) configured to pass the signals in the third frequency range. The filter (e.g., the LPF) configured to pass the signals in the second frequency range may be configured to pass signals having a frequency lower than the reference frequency. The reference frequency may be higher than the highest frequency among frequency bands in the second frequency range supported by the RFFE module 230. The filter (e.g., the BPF or the HPF) configured to pass the signals in the third frequency range may be configured to pass signals having a frequency higher than or equal to the reference frequency. The reference frequency may be lower than the lowest frequency among frequency bands in the third frequency range supported by the RFFE module 230.

As an example, the second diplexer 562 may include the first port, the second port, and the third port. The filter configured to pass the signals in the second frequency range may be connected to the first port, and the filter configured to pass the signals in the third frequency range may be connected to the second port. The first port and the second port may be connected to the antenna switching circuitry 540. The third port may be connected to the antenna (e.g., the second antenna 592). The second diplexer 562 may filter for the signals in the second frequency range (e.g., the second frequency range 322, MB) from RF signals received through the antenna. The second diplexer 562 may filter for the signals in the third frequency range (e.g., the third frequency range 323, HB) from RF signals received through the antenna. The second diplexer 562 may be used as a transmission path in addition to separation of a reception path. The second diplexer 562 may be configured to filter for the signals in the second frequency range from signals provided from the first port and deliver the signals in the second frequency range to the antenna through the third port. The second diplexer 562 may be configured to filter for the signals in the third frequency range from signals provided from the second port and deliver the signals in the third frequency range to the antenna through the third port.

According to an embodiment, a diplexer may be used to extract signals in a specific frequency range. For example, the first diplexer 561 may be configured to extract the signals in the first frequency range (e.g., the first frequency range 321, LB) from among RF signals (e.g., RF signals received through an antenna). The first diplexer 561 may be configured to extract the signals in the second frequency range (e.g., the second frequency range 322, MB) from among RF signals (e.g., RF signals received through an antenna). As an example, the first diplexer 561 may include the filter (e.g., the LPF) configured to pass the signals in the first frequency range and the filter (e.g., the BPF or the HPF) configured to pass the signals in the second frequency range. The filter (e.g., the LPF) configured to pass the signals in the first frequency range may be configured to pass signals having a frequency lower than the reference frequency. The reference frequency may be higher than the highest frequency among the frequency bands in the first frequency range supported by the RFFE module 230. The filter (e.g., the BPF or the HPF) configured to pass the signals in the second frequency range may be configured to pass signals having a frequency higher than or equal to the reference frequency. The reference frequency may be lower than the lowest frequency among the frequency bands in the second frequency range supported by the RFFE module 230.

The first diplexer 561 may include the first port, the second port, and the third port. The first port and the second port may be connected to the antenna switching circuitry 540. The third port may be connected to the antenna (e.g., the first antenna 591). The first diplexer 561 may extract the signals in the first frequency range (e.g., the first frequency range 321, LB) from RF signals received through the antenna. The first diplexer 561 may extract the signals in the second frequency range (e.g., the second frequency range 322, MB) from RF signals received through the antenna. The first diplexer 561 may be used as a transmission path in addition to separation of a reception path. The first diplexer 561 may be configured to extract the signals in the first frequency range from signals provided from the first port and deliver the extracted signals in the first frequency range to the antenna through the third port. The first diplexer 561 may be configured to extract the signals in the second frequency range from signals provided from the second port and deliver the extracted signals in the second frequency range to the antenna through the third port.

For example, the second diplexer 562 may be configured to extract the signals in the second frequency range (e.g., the second frequency range 322, MB) from among RF signals (e.g., RF signals received through an antenna). The second diplexer 562 may be configured to extract the signals in the third frequency range (e.g., the third frequency range 323, HB) from among RF signals (e.g., RF signals received through an antenna). As an example, the second diplexer 562 may include the filter (e.g., the LPF) configured to pass the signals in the second frequency range and the filter (e.g., the BPF or the HPF) configured to pass the signals in the third frequency range. The filter (e.g., the LPF) configured to pass the signals in the second frequency range may be configured to pass signals having a frequency lower than a first reference frequency. The first reference frequency may be higher than the highest frequency among the frequency bands in the second frequency range supported by the RFFE module 230. The filter (e.g., the BPF or the HPF) configured to pass the signals in the third frequency range may be configured to pass signals having a frequency higher than or equal to a second reference frequency. The second reference frequency may be lower than the lowest frequency among the frequency bands in the second frequency range supported by the RFFE module 230.

The second diplexer 562 may include the first port, the second port, and the third port. The first port and the second port may be connected to the antenna switching circuitry 540. The third port may be connected to the antenna (e.g., the second antenna 592). The second diplexer 562 may extract the signals in the first frequency range (e.g., the second frequency range 322, MB) from RF signals received through the antenna. The second diplexer 562 may extract the signals in the second frequency range (e.g., the third frequency range 323, HB) from RF signals received through the antenna. The second diplexer 562 may be used as a transmission path in addition to separation of a reception path. The second diplexer 562 may be configured to extract the signals in the second frequency range from signals provided from the first port and deliver the extracted signals in the second frequency range to the antenna through the third port. The second diplexer 562 may be configured to extract the signals in the third frequency range from signals provided from the second port and deliver the extracted signals in the third frequency range to the antenna through the third port.

According to an embodiment, the RFFE module 230 may be connected to the first antenna 591 and the second antenna 592. For the first antenna 591 and the second antenna 592, the descriptions of the antenna 290 of FIG. 2 may be referred to. The first antenna 591 may be electrically connected to the first diplexer 561. As an example, the RFFE module 230 may have a first diplexer port connected to the first diplexer 561. The first antenna 591 may be electrically connected to the first diplexer port. The second antenna 592 may be electrically connected to the second diplexer 562. As an example, the RFFE module 230 may have a second diplexer port connected to the second diplexer 562. The second antenna 592 may be electrically connected to the second diplexer port.

According to an embodiment, although a signal path and an antenna are always connected to the antenna switching circuitry 540 in the RFFE module 230, an electrical connection between the signal path and the antenna may be controlled by an operation of the antenna switching circuitry 540. For example, the electronic device 101 may be configured to select an antenna corresponding to a signal path by controlling an electrical connection between a pole and a throw of the antenna switching circuitry 540. The antenna switching circuitry 540 may be configured to electrically connect an antenna corresponding to a signal path including each filter circuitry. For example, the electronic device 101 may control the antenna switching circuitry 540 to electrically connect the first signal path 571 and a specific antenna (e.g., the first antenna 591 or the second antenna 592). For example, the electronic device 101 may control the antenna switching circuitry 540 to electrically connect the second signal path 572 and a specific antenna (e.g., the first antenna 591 or the second antenna 592). For example, the electronic device 101 may control the antenna switching circuitry 540 to electrically connect the third signal path 573 and a specific antenna (e.g., the first antenna 591 or the second antenna 592). For example, the electronic device 101 may control the antenna switching circuitry 540 to electrically connect the fourth signal path 574 and a specific antenna (e.g., the first antenna 591 or the second antenna 592). The antenna switching circuitry 540 may be referred to as, in addition to antenna switching circuitry, an antenna switch, an antenna switch module, an antenna selection module, an antenna selector, antenna matrix circuitry, antenna selection circuitry, a selection switch, a switching module, an antenna path switch, and/or a technical term equivalent thereto.

According to an embodiment, one or more frequency bands supportable by each antenna may be defined. A supported frequency band may vary according to a structural characteristic (e.g., a physical shape and/or disposition structure or a length of a conductive portion) of an antenna. Various types of conductive portions may serve as a radiator of an antenna. For example, a metal frame of the electronic device 101 may include a plurality of conductive portions. A conductive portion disposed between injected non-conductive portions may be used as a radiator of an antenna. For another example, the electronic device 101 may include a conductive portion having a patch shape. For still another example, some surfaces forming a slot or a slit in a conductor may be used as a radiator of an antenna. Such a conductive portion may be designed to cause resonance of an RF signal in a specific frequency band. In addition, as a position of a feeding point is changed or a length of an electrical path is formed differently, an antenna may support various frequency bands. According to an embodiment, the first antenna 591 of the electronic device 101 may be configured to support frequency bands of the first frequency range 321 and the second frequency range 322. The second antenna 592 of the electronic device 101 may be configured to support frequency bands of the third frequency range 323. The first antenna 591 may be electrically connected to the first diplexer 561. The one end of the first diplexer 561 may be electrically connected to the first throw 549a of the antenna switching circuitry 540. The another end of the first diplexer 561 may be electrically connected to the second throw 549b of the antenna switching circuitry 540. The second antenna 592 may be electrically connected to the second diplexer 562. The one end of the second diplexer 562 may be electrically connected to the third throw 549c of the antenna switching circuitry 540. The another end of the second diplexer 562 may be electrically connected to the fourth throw 549d of the antenna switching circuitry 540.

For example, the electronic device 101 may transmit a signal on the first frequency band 331. The electronic device 101 may control the antenna switching circuitry 540 to electrically connect the first signal path 571 and the first antenna 591. The electronic device 101 may control the antenna switching circuitry 540 to electrically connect the first signal path 571 and the first antenna 591. According to control of the processor 210 and/or the RF transceiver 220, the first pole 544a and the first throw 549a of the antenna switching circuitry 540 may be electrically connected. Accordingly, the first signal path 571 for the first frequency band 331 may be electrically connected to the first antenna 591 through the first diplexer 561.

For example, the electronic device 101 may transmit a signal on the second frequency band 332. The electronic device 101 may control the antenna switching circuitry 540 to electrically connect the second signal path 572 and the first antenna 591. According to control of the processor 210 and/or the RF transceiver 220, the second pole 544b and the second throw 549b of the antenna switching circuitry 540 may be electrically connected. The second signal path 572 for the second frequency band 332 may be electrically connected to the first antenna 591 through the first diplexer 561.

For example, the electronic device 101 may transmit a signal on the third frequency band 333. The electronic device 101 may control the antenna switching circuitry 540 to electrically connect the third signal path 573 and the second antenna 592. The electronic device 101 may control the antenna switching circuitry 540 to electrically connect the third signal path 573 and the second antenna 592. According to control of the processor 210 and/or the RF transceiver 220, the fourth pole 544d and the fourth throw 549d of the antenna switching circuitry 540 may be electrically connected. Accordingly, the third signal path 573 for the third frequency band 333 may be electrically connected to the second antenna 592 through the second diplexer 562.

Although one frequency band for the first frequency range 321, two frequency bands for the second frequency range 322, and one frequency band for the third frequency range 323 are illustrated in FIG. 5, embodiments of the present disclosure are not limited thereto. The RFFE module 230 according to embodiments of the present disclosure may include components for a plurality of low frequency bands (e.g., the first power amplifier 511 or the first filter circuitry 531), components for a plurality of middle frequency bands (e.g., the second power amplifier 512 or the second filter circuitry 532), and components for a plurality of high frequency bands (e.g., the third power amplifier 513 or the third filter circuitry 533), and may include diplexers (e.g., the first diplexer 561 or the second diplexer 562). Accordingly, the number of frequency bands corresponding to each frequency range exemplarily described in FIG. 5 is not construed as limiting a structure of the RFFE module 230 according to embodiments. As a non-limiting example, supporting only one frequency band in a specific frequency range may also be understood as an embodiment of the present disclosure.

In FIG. 5, in explaining a role of a diplexer, in terms of a reception path, it has been described as separating signals received from an antenna into signals in a specific frequency range, extracting signals in a specific frequency range, or passing signals in a specific frequency range, but these descriptions are not construed as limiting an implementation of a diplexer (e.g., a specific type of filter). As an example, the diplexer may have a structure including one LPF and one BPF. By limiting an upper limit of a frequency to be passed, the diplexer may stably function. Through the LPF and the BPF, signals input through an antenna may be divided into signals in different frequency ranges. As another example, the diplexer may include one LPF and one HPF. Through the LPF and the HPF, signals input through an antenna may be divided into signals in different frequency ranges. As still another example, the diplexer may include a BPF and another BPF. Through the BPF and the another BPF, signals input through an antenna may be extracted as signals in different frequency ranges.

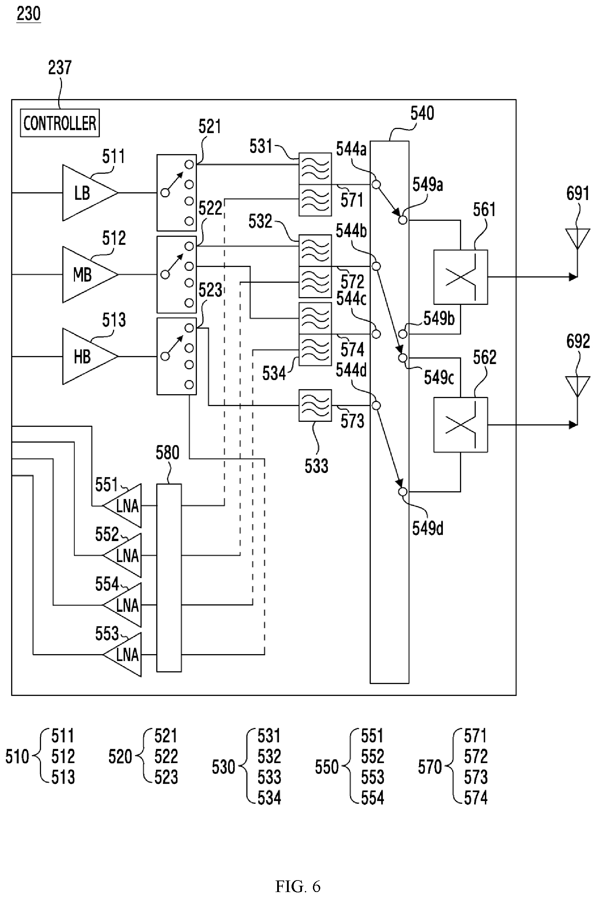

FIG. 6 illustrates an example of an RFFE module (e.g., the RFFE module 230) including a diplexer. In FIG. 6, an example in which the RFFE module 230 of FIG. 5 is connected to antennas different from the antennas (e.g., the first antenna 591 and the second antenna 592) of FIG. 5 is described. The same reference numerals may indicate the same descriptions.

Referring to FIG. 6, the RFFE module 230 may include power amplifiers 510, transmission switches 520, filter circuitries 530, antenna switching circuitry 540, low noise amplifiers 550, and/or a reception switch 580. For a description of components of the RFFE module 230, the description of FIG. 5 may be referred to. The RFFE module 230 may include the antenna switching circuitry 540. The antenna switching circuitry 540 may be connected to signal paths 570. The RFFE module 230 may include a first diplexer 561 and/or a second diplexer 562. The antenna switching circuitry 540 may be connected to the first diplexer 561 and the second diplexer 562. The electronic device 101 may be configured to select an antenna corresponding to a signal path by controlling an electrical connection between a pole and a throw of the antenna switching circuitry 540. For a description of the antenna switching circuitry 540, the first diplexer 561, the second diplexer 562, and the signal paths 570, the description of FIG. 5 may be referred to.

According to an embodiment, the RFFE module 230 may be connected to a first antenna 691 and a second antenna 692. For the first antenna 691 and the second antenna 692, the descriptions of the antenna 290 of FIG. 2 may be referred to. The first antenna 691 may be electrically connected to the first diplexer 561. As an example, the RFFE module 230 may have a first diplexer port connected to the first diplexer 561. The first antenna 691 may be electrically connected to the first diplexer port. The second antenna 692 may be electrically connected to the second diplexer 562. As an example, the RFFE module 230 may have a second diplexer port connected to the second diplexer 562. The second antenna 692 may be electrically connected to the second diplexer port.

According to an embodiment, one or more frequency bands supportable by each antenna may be defined. According to an embodiment, the first antenna 691 of the electronic device 101 may be configured to support frequency bands of a first frequency range 321. The second antenna 692 of the electronic device 101 may be configured to support frequency bands of a second frequency range 322 and a third frequency range 323. The first antenna 691 may be electrically connected to the first diplexer 561. One end of the first diplexer 561 may be electrically connected to a first throw 549a of the antenna switching circuitry 540. Another end of the first diplexer 561 may be electrically connected to a second throw 549b of the antenna switching circuitry 540. The second antenna 692 may be electrically connected to the second diplexer 562. One end of the second diplexer 562 may be electrically connected to a third throw 549c of the antenna switching circuitry 540. Another end of the second diplexer 562 may be electrically connected to a fourth throw 549d of the antenna switching circuitry 540.

The first diplexer 561 may be configured to pass signals in a frequency band of the first frequency range. For example, the first diplexer 561 may have a first port, a second port, and a third port. The first port of the first diplexer 561 may be connected to the first throw 549a, and the second port of the first diplexer 561 may be connected to the second throw 549b. The first diplexer 561 (e.g., a first filter of the first diplexer 561) may be configured to extract (or separate) signals in a frequency band of the first frequency range from RF signals received through the first antenna 691 connected to the third port. The second diplexer 562 may be configured to pass signals in a frequency band of the second frequency range and signals in a frequency band of the third frequency range. For example, the second diplexer 562 may have a first port, a second port, and a third port. The first port of the second diplexer 562 may be connected to the third throw 549c, and the second port of the second diplexer 562 may be connected to the fourth throw 549d. The second diplexer 562 (e.g., a third filter of the second diplexer 562) may be configured to extract (or separate) signals in a frequency band of the second frequency range from RF signals received through the second antenna 692. The second diplexer 562 may provide the extracted signals to the third throw 549c of the antenna switching circuitry 540 through the first port of the second diplexer 562. The second diplexer 562 (e.g., a fourth filter of the second diplexer 562) may be configured to extract (or separate) signals in a frequency band of the third frequency range from RF signals received through the second antenna 692. The second diplexer 562 may provide the extracted signals to the fourth throw 549d of the antenna switching circuitry 540 through the second port of the second diplexer 562.

For example, the electronic device 101 may transmit a signal on a first frequency band 331. The electronic device 101 may control the antenna switching circuitry 540 to electrically connect a signal path 571 and the first antenna 691. According to control of the processor 210 and/or the RF transceiver 220, a first pole 544a and the first throw 549a of the antenna switching circuitry 540 may be electrically connected. Accordingly, the first signal path 571 for the first frequency band 331 may be electrically connected to the first antenna 691 through the first diplexer 561.

For example, the electronic device 101 may transmit a signal on a second frequency band 332. The electronic device 101 may control the antenna switching circuitry 540 to electrically connect a second signal path 572 and the second antenna 692. According to control of the processor 210 and/or the RF transceiver 220, a second pole 544b and the third throw 549c of the antenna switching circuitry 540 may be electrically connected. The second signal path 572 for the second frequency band 332 may be electrically connected to the second antenna 692 through the second diplexer 562.

For example, the electronic device 101 may transmit a signal on a third frequency band 333. The electronic device 101 may control the antenna switching circuitry 540 to electrically connect a third signal path 573 and the second antenna 692. According to control of the processor 210 and/or the RF transceiver 220, a fourth pole 544d and the fourth throw 549d of the antenna switching circuitry 540 may be electrically connected. Accordingly, the third signal path 573 for the third frequency band 333 may be electrically connected to the second antenna 692 through the second diplexer 562.

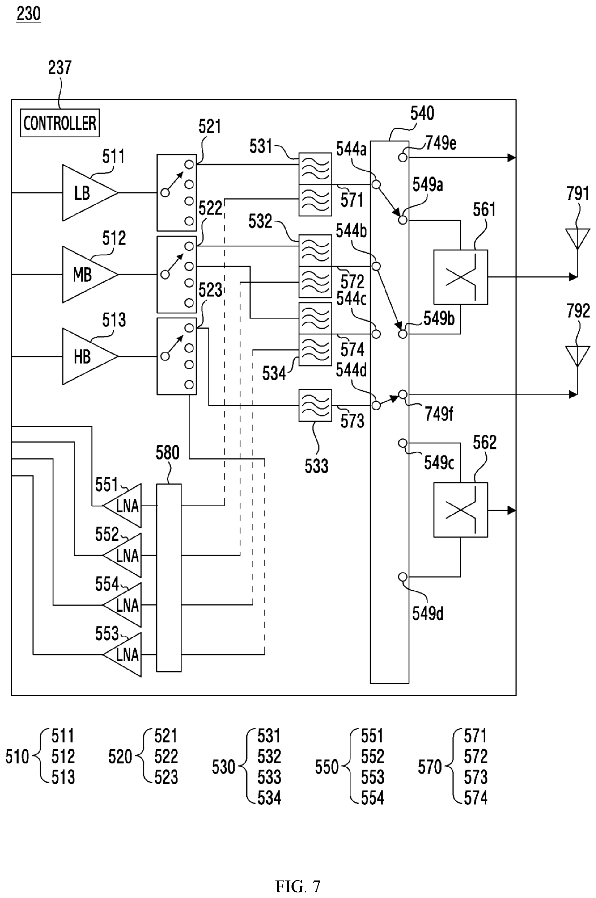

FIG. 7 illustrates an example of an RFFE module (e.g., the RFFE module 230) including a diplexer. In FIG. 7, an example in which an antenna is connected to a separate port of the RFFE module 230 of FIG. 5 is described. The same reference numerals may indicate the same descriptions.

Referring to FIG. 7, the RFFE module 230 may include power amplifiers 510, transmission switches 520, filter circuitries 530, antenna switching circuitry 540, low noise amplifiers 550, and/or a reception switch 580. For a description of components of the RFFE module 230, the description of FIG. 5 may be referred to. The RFFE module 230 may include the antenna switching circuitry 540. The antenna switching circuitry 540 may be connected to signal paths 570. The RFFE module 230 may include a first diplexer 561 and/or a second diplexer 562. The antenna switching circuitry 540 may be connected to the first diplexer 561 and the second diplexer 562. The electronic device 101 may be configured to select an antenna corresponding to a signal path by controlling an electrical connection between a pole and a throw of the antenna switching circuitry 540. The antenna switching circuitry 540 may include a plurality of poles and a plurality of throws. For example, the antenna switching circuitry 540 may include a first pole 544a, a second pole 544b, a third pole 544c, and/or a fourth pole 544d. The antenna switching circuitry 540 may include a first throw 549a, a second throw 549b, a third throw 594c, a fourth throw 549d, a fifth throw 749e, or a sixth throw 749f. For a description of the antenna switching circuitry 540, the first diplexer 561, the second diplexer 562, and the signal paths 570, the description of FIG. 5 may be referred to.

According to an embodiment, the RFFE module 230 may be connected to a first antenna 791 and/or a second antenna 792. For the first antenna 791 and the second antenna 792, the descriptions of the antenna 290 of FIG. 2 may be referred to. The first antenna 791 may be electrically connected to the first diplexer 561. As an example, the RFFE module 230 may have a first diplexer port corresponding to the first diplexer 561. The first antenna 791 may be electrically connected to the first diplexer port. In an embodiment, the second antenna 792 may be directly electrically connected to the antenna switching circuitry 540. As an example, the RFFE module 230 may have a second antenna port connected to the sixth throw 749f of the antenna switching circuitry 540 through a feedline. The second antenna 792 may be electrically connected to the second antenna port.

According to an embodiment, one or more frequency bands supportable by each antenna may be defined. According to an embodiment, the first antenna 791 of the electronic device 101 may be configured to support frequency bands of a first frequency range 321 and a second frequency range 322. The second antenna 792 of the electronic device 101 may be configured to support a frequency band of a third frequency range 323. The first antenna 791 may be electrically connected to the first diplexer 561. One end of the first diplexer 561 may be electrically connected to the first throw 549a of the antenna switching circuitry 540. Another end of the first diplexer 561 may be electrically connected to the second throw 549b of the antenna switching circuitry 540. In an embodiment, the second antenna 792 may be connected to the sixth throw 749f of the antenna switching circuitry 540. For example, the second antenna 792 may be connected to the sixth throw 749f of the antenna switching circuitry 540 without a diplexer.

The first diplexer 561 may be configured to pass signals in a frequency band of the first frequency range and signals in a frequency band of the second frequency range. For example, the first diplexer 561 may have a first port, a second port, and a third port. The first port of the first diplexer 561 may be connected to the first throw 549a, and the second port of the first diplexer 561 may be connected to the second throw 549b. The first diplexer 561 (e.g., a first filter of the first diplexer 561) may be configured to extract (or separate) signals in a frequency band of the first frequency range from RF signals received through the first antenna 791 connected to the third port. The first diplexer 561 may provide the extracted signals to the first throw 549a of the antenna switching circuitry 540 through the first port of the first diplexer 561. The first diplexer 561 (e.g., a second filter of the first diplexer 561) may be configured to extract (or separate) signals in a frequency band of the second frequency range from RF signals received through the first antenna 791 connected to the third port. The first diplexer 561 may provide the extracted signals to the second throw 549b of the antenna switching circuitry 540 through the second port of the first diplexer 561.

For example, the electronic device 101 may transmit a signal on a first frequency band 331. The electronic device 101 may control the antenna switching circuitry 540 to electrically connect a first signal path 571 and the first antenna 791. According to control of the processor 210 and/or the RF transceiver 220, the first pole 544a and the first throw 549a of the antenna switching circuitry 540 may be electrically connected. Accordingly, the first signal path 571 for the first frequency band 331 may be electrically connected to the first antenna 791 through the first diplexer 561.

For example, the electronic device 101 may transmit a signal on a second frequency band 332. The electronic device 101 may control the antenna switching circuitry 540 to electrically connect a second signal path 572 and the first antenna 791. According to control of the processor 210 and/or the RF transceiver 220, the second pole 544b and the second throw 549b of the antenna switching circuitry 540 may be electrically connected. The second signal path 572 for the second frequency band 332 may be electrically connected to the first antenna 791 through the first diplexer 561.

For example, the electronic device 101 may transmit a signal on a third frequency band 333. The electronic device 101 may control the antenna switching circuitry 540 to electrically connect a third signal path 573 and the second antenna 792. According to control of the processor 210 and/or the RF transceiver 220, the fourth pole 544d and the sixth throw 749f of the antenna switching circuitry 540 may be electrically connected. Accordingly, the third signal path 573 for the third frequency band 333 may be electrically connected to the second antenna 792 through the antenna switching circuitry 540 without a diplexer.

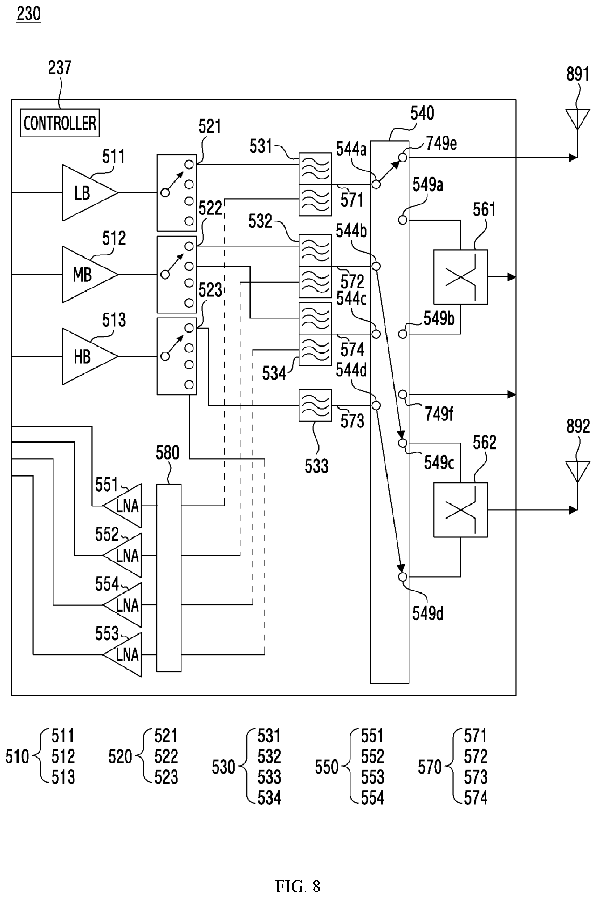

FIG. 8 illustrates an example of an RFFE module (e.g., the RFFE module 230) including a diplexer. In FIG. 7, an example in which an antenna is connected to a separate port of the RFFE module 230 of FIG. 8 is described. The same reference numerals may indicate the same descriptions.

Referring to FIG. 8, the RFFE module 230 may include power amplifiers 510, transmission switches 520, filter circuitries 530, antenna switching circuitry 540, low noise amplifiers 550, and/or a reception switch 580. For a description of components of the RFFE module 230, the description of FIG. 5 may be referred to. The RFFE module 230 may include the antenna switching circuitry 540. The antenna switching circuitry 540 may be connected to signal paths 570. The RFFE module 230 may include a first diplexer 561 and/or a second diplexer 562. The antenna switching circuitry 540 may be connected to the first diplexer 561 and the second diplexer 562. The electronic device 101 may be configured to select an antenna corresponding to a signal path by controlling an electrical connection between a pole and a throw of the antenna switching circuitry 540. The antenna switching circuitry 540 may include a plurality of poles and a plurality of throws. For example, the antenna switching circuitry 540 may include a first pole 544a, a second pole 544b, a third pole 544c, and/or a fourth pole 544d. The antenna switching circuitry 540 may include a first throw 549a, a second throw 549b, a third throw 594c, a fourth throw 549d, a fifth throw 749e, or a sixth throw 749f. For a description of the antenna switching circuitry 540, the first diplexer 561, the second diplexer 562, and the signal paths 570, the description of FIG. 5 may be referred to.

According to an embodiment, the RFFE module 230 may be connected to a first antenna 891 and a second antenna 892. For the first antenna 891 and the second antenna 892, the descriptions of the antenna 290 of FIG. 2 may be referred to. The first antenna 891 may be directly electrically connected to the antenna switching circuitry 540. As an example, the RFFE module 230 may have a first antenna port connected to the fifth throw 749e of the antenna switching circuitry 540 through a feedline. The first antenna 891 may be electrically connected to the first antenna port. The second antenna 892 may be electrically connected to the second diplexer 562. As an example, the RFFE module 230 may have a second diplexer port corresponding to the second diplexer 562. The second antenna 892 may be electrically connected to the second diplexer port.

According to an embodiment, one or more frequency bands supportable by each antenna may be defined. According to an embodiment, the first antenna 891 of the electronic device 101 may be configured to support a frequency band of a first frequency range 321. The second antenna 892 of the electronic device 101 may be configured to support frequency bands of a second frequency range 322 and a third frequency range 323. The first antenna 891 may be connected to another output port other than a diplexer port connected to the first diplexer 561. For example, the first antenna 891 may be directly connected to the antenna switching circuitry 540 without a diplexer. The second antenna 892 may be electrically connected to the second diplexer 562. One end of the second diplexer 562 may be electrically connected to the third throw 549c of the antenna switching circuitry 540. Another end of the second diplexer 562 may be electrically connected to the fourth throw 549d of the antenna switching circuitry 540.

The second diplexer 562 may be configured to pass signals in a frequency band of the second frequency range and signals in a frequency band of the third frequency range. For example, the second diplexer 562 may have a first port, a second port, and a third port. The first port of the second diplexer 562 may be connected to the third throw 549c, and the second port of the second diplexer 562 may be connected to the fourth throw 549d. The second diplexer 562 (e.g., a third filter of the second diplexer 562) may be configured to extract (or separate) signals in a frequency band of the second frequency range from RF signals received through the second antenna 892 connected to the third port. The second diplexer 562 may provide the extracted signals to the third throw 549c of the antenna switching circuitry 540 through the first port of the second diplexer 562. The second diplexer 562 (e.g., a fourth filter of the second diplexer 562) may be configured to extract (or separate) signals in a frequency band of the third frequency range from RF signals received through the second antenna 892 connected to the third port. The second diplexer 562 may provide the extracted signals to the fourth throw 549d of the antenna switching circuitry 540 through the second port of the second diplexer 562.

For example, the electronic device 101 may transmit a signal on a first frequency band 331. The electronic device 101 may control the antenna switching circuitry 540 to electrically connect a first signal path 571 and the first antenna 891. According to control of the processor 210 and/or the RF transceiver 220, the first pole 544a and the fifth throw 749e of the antenna switching circuitry 540 may be electrically connected. Accordingly, the first signal path 571 for the first frequency band 331 may be electrically connected to the first antenna 891 through the antenna switching circuitry 540 without a diplexer.

For example, the electronic device 101 may transmit a signal on a second frequency band 332. The electronic device 101 may control the antenna switching circuitry 540 to electrically connect a second signal path 572 and the second antenna 892. According to control of the processor 210 and/or the RF transceiver 220, the second pole 544b and the third throw 549c of the antenna switching circuitry 540 may be electrically connected. The second signal path 572 for the second frequency band 332 may be electrically connected to the second antenna 892 through the second diplexer 562.

For example, the electronic device 101 may transmit a signal on a third frequency band 333. The electronic device 101 may control the antenna switching circuitry 540 to electrically connect a third signal path 573 and the second antenna 892. According to control of the processor 210 and/or the RF transceiver 220, the fourth pole 544d and the fourth throw 549d of the antenna switching circuitry 540 may be electrically connected. The third signal path 573 for the third frequency band may be electrically connected to the second antenna 892 through the second diplexer 562.

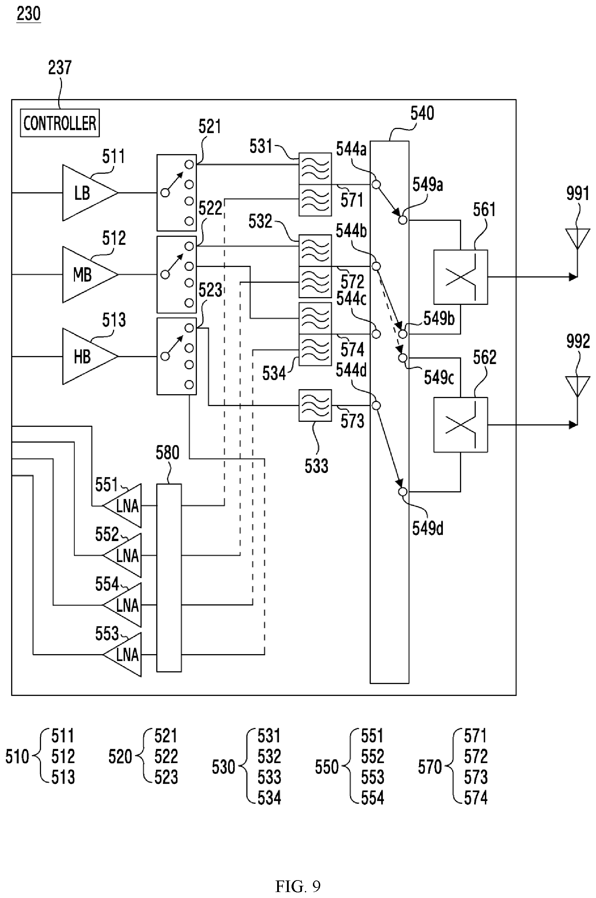

FIG. 9 illustrates an example of an RFFE module (e.g., the RFFE module 230) including a diplexer. In FIG. 9, an example in which the RFFE module 230 of FIG. 5 is connected to antennas different from the antennas of FIG. 5 (e.g., the first antenna 591 and the second antenna 592) is described. The same reference numerals may indicate the same descriptions.

Referring to FIG. 9, the RFFE module 230 may include power amplifiers 510, transmission switches 520, filter circuitries 530, antenna switching circuitry 540, low noise amplifiers 550, and/or a reception switch 580. For a description of components of the RFFE module 230, the description of FIG. 5 may be referred to. The RFFE module 230 may include the antenna switching circuitry 540. The antenna switching circuitry 540 may be connected to signal paths 570. The RFFE module 230 may include a first diplexer 561 and/or a second diplexer 562. The antenna switching circuitry 540 may be connected to the first diplexer 561 and the second diplexer 562. The electronic device 101 may be configured to select an antenna corresponding to a signal path by controlling an electrical connection between a pole and a throw of the antenna switching circuitry 540. For a description of the antenna switching circuitry 540, the first diplexer 561, the second diplexer 562, and the signal paths 570, the description of FIG. 5 may be referred to.

According to an embodiment, the RFFE module 230 may be connected to a first antenna 991 and a second antenna 992. For the first antenna 991 and the second antenna 992, the descriptions of the antenna 290 of FIG. 2 may be referred to. The first antenna 991 may be electrically connected to the first diplexer 561. As an example, the RFFE module 230 may have a first diplexer port connected to the first diplexer 561. The first antenna 991 may be electrically connected to the first diplexer port. The second antenna 992 may be electrically connected to the second diplexer 562. As an example, the RFFE module 230 may have a second diplexer port connected to the second diplexer 562. The second antenna 992 may be electrically connected to the second diplexer port.

According to an embodiment, one or more frequency bands supportable by each antenna may be defined. According to an embodiment, the first antenna 991 of the electronic device 101 may be configured to support frequency bands of a first frequency range 321 and a second frequency range 322. The second antenna 992 of the electronic device 101 may be configured to support frequency bands of the second frequency range 322 and a third frequency range 323. The first antenna 991 may be electrically connected to the first diplexer 561. One end of the first diplexer 561 may be electrically connected to a first throw 549a of the antenna switching circuitry 540. Another end of the first diplexer 561 may be electrically connected to a second throw 549b of the antenna switching circuitry 540. The second antenna 992 may be electrically connected to the second diplexer 562. One end of the second diplexer 562 may be electrically connected to a third throw 549c of the antenna switching circuitry 540. Another end of the second diplexer 562 may be electrically connected to a fourth throw 549d of the antenna switching circuitry 540.

The first diplexer 561 may be configured to pass signals in a frequency band of the first frequency range and signals in a frequency band of the second frequency range. For example, the first diplexer 561 may have a first port, a second port, and a third port. The first port of the first diplexer 561 may be connected to the first throw 549a, and the second port of the first diplexer 561 may be connected to the second throw 549b. The first diplexer 561 (e.g., a first filter of the first diplexer 561) may be configured to extract (or separate) signals in a frequency band of the first frequency range from RF signals received through the first antenna 991 connected to the third port. The first diplexer 561 may provide the extracted signals to the first throw 549a of the antenna switching circuitry 540 through the first port of the first diplexer 561. The first diplexer 561 (e.g., a second filter of the first diplexer 561) may be configured to extract (or separate) signals in a frequency band of the second frequency range from RF signals received through the first antenna 991 connected to the third port. The first diplexer 561 may provide the extracted signals to the second throw 549b of the antenna switching circuitry 540 through the second port of the first diplexer 561.

The second diplexer 562 may be configured to pass signals in a frequency band of the second frequency range and signals in a frequency band of the third frequency range. For example, the second diplexer 562 may have a first port, a second port, and a third port. The first port of the second diplexer 562 may be connected to the third throw 549c, and the second port of the second diplexer 562 may be connected to the fourth throw 549d. The second diplexer 562 (e.g., a third filter of the second diplexer 562) may be configured to extract (or separate) signals in a frequency band of the second frequency range from RF signals received through the second antenna 992 connected to the third port. The second diplexer 562 may provide the extracted signals to the third throw 549c of the antenna switching circuitry 540 through the first port of the second diplexer 562. The second diplexer 562 (e.g., a fourth filter of the second diplexer 562) may be configured to extract (or separate) signals in a frequency band of the third frequency range from RF signals received through the second antenna 992 connected to the third port. The second diplexer 562 may provide the extracted signals to the fourth throw 549d of the antenna switching circuitry 540 through the second port of the second diplexer 562.

For example, the electronic device 101 may transmit a signal on a first frequency band 331. The electronic device 101 may control the antenna switching circuitry 540 to electrically connect a first signal path 571 and the first antenna 991. According to control of the processor 210 and/or the RF transceiver 220, a first pole 544a and the first throw 549a of the antenna switching circuitry 540 may be electrically connected. Accordingly, the first signal path 571 for the first frequency band 331 may be electrically connected to the first antenna 991 through the first diplexer 561.

For example, the electronic device 101 may transmit a signal on a second frequency band 332. Since both the first antenna 991 and the second antenna 992 may support frequency bands of the second frequency range 322, the electronic device 101 may adaptively select an antenna for the second frequency band 332. The electronic device 101 may control the antenna switching circuitry 540 to electrically connect a second signal path 572 and the selected antenna (e.g., the first antenna 991 or the second antenna 992). According to control of the processor 210 and/or the RF transceiver 220, a second pole 544b of the antenna switching circuitry 540 may be selectively connected to one of the third throw 549c and the fourth throw 549d. As an example, in a case that the first antenna 991 is selected, the second signal path 572 for the second frequency band 332 may be electrically connected to the first antenna 991 through the first diplexer 561. As an example, in a case that the second antenna 992 is selected, the second signal path 572 for the second frequency band 332 may be electrically connected to the second antenna 992 through the second diplexer 562.

For example, the electronic device 101 may transmit a signal on a third frequency band 333. The electronic device 101 may control the antenna switching circuitry 540 to electrically connect a third signal path 573 and the second antenna 992. According to control of the processor 210 and/or the RF transceiver 220, a fourth pole 544d and the fourth throw 549d of the antenna switching circuitry 540 may be electrically connected. Accordingly, the third signal path 573 for the third frequency band may be electrically connected to the second antenna 992 through the second diplexer 562.

The electronic device 101 may select, from among antennas (e.g., the first antenna 991 and the second antenna 992) supporting frequency bands of the second frequency range 322, an antenna for transmitting or receiving a signal in the second frequency band (in other words, a frequency band of a mid-band). The antenna may be selected according to various schemes. According to an embodiment, the electronic device 101 may select an antenna based on a signal quality. The signal quality may be, for example, at least one of reference signal received power (RSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), or a block error rate (BLER). The electronic device 101 may measure a first signal quality for signals in the second frequency band 332 through the first antenna 991. The electronic device 101 may measure a second signal quality for signals in the second frequency band 332 through the second antenna 992. In an embodiment, the electronic device 101 may select an antenna through a comparison of the first signal quality and the second signal quality. For example, in a case that the first signal quality is higher than the second signal quality, the electronic device 101 may select the first antenna 991. The electronic device 101 may control the antenna switching circuitry 540 such that the second signal path 572 is electrically connected to the first diplexer 561. For example, in a case that the first signal quality is lower than or equal to the second signal quality, the electronic device 101 may select the second antenna 992. The electronic device 101 may control the antenna switching circuitry 540 such that the second signal path 572 is electrically connected to the second diplexer 562.

According to an embodiment, the electronic device 101 may select an antenna based on a specified event. For example, if the electronic device 101 detects an event affecting performance of the first antenna 991 (e.g., USB insertion, activation of a camera, or a grip of a user), the electronic device 101 may select the second antenna 992. The electronic device 101 may control the antenna switching circuitry 540 such that the second signal path 572 is electrically connected to the second diplexer 562.

According to an embodiment, the electronic device 101 may select an antenna based on a state of the electronic device 101. For example, the electronic device 101 may be a foldable-type device including two housing parts (e.g., a first housing part and a second housing part rotatable with respect to the first housing part). Performance of an antenna may vary according to whether the state of the electronic device 101 is a folded state or an unfolded state. As an example, in a case that the electronic device 101 is in the folded state, the electronic device 101 may select the first antenna 991. As an example, in a case that the electronic device 101 is in the unfolded state, the electronic device 101 may select the second antenna 992. For another example, the electronic device 101 may be a rollable-type device including two housing parts (e.g., a first housing part and a second housing part slidable with respect to the first housing part). Performance of an antenna may vary according to whether the state of the electronic device 101 is a slide-in state (or a reduced state or a closed state) or a slide-out state (or an expanded state or an open state). As an example, in a case that the electronic device 101 is in the slide-in state, the electronic device 101 may select the first antenna 991. As an example, in a case that the electronic device 101 is in the slide-out state, the electronic device 101 may select the second antenna 992.

As described through FIGS. 5 to 9, an RFFE module (e.g., the RFFE module 230) according to embodiments of the present disclosure may be universally applied to electronic devices having different antenna disposition structures. The RFFE module may be implemented as a single chip, and the single chip may operate in various schemes according to a connection with antennas of an electronic device (e.g., the electronic device 101). Hereinafter, in the present disclosure, the RFFE module may be referred to as a wireless communication chip, an RF chip, a wireless transceiver chip, a wireless chip, a communication chip, and/or a technical term equivalent thereto, in terms of being implemented as a chip. For example, in a case that an electronic device including the RFFE module has a first antenna (e.g., the first antenna 591) supporting both a first frequency range and a second frequency range and a second antenna (e.g., the second antenna 592) supporting a third frequency range, a first diplexer port of the single chip may be connected to the first antenna, and the second antenna may be connected to a second diplexer port of the single chip. Through the single chip, signal processing of all frequency bands of the first frequency range, the second frequency range, and the third frequency range may be supported. For example, in a case that the electronic device including the RFFE module has a first antenna (e.g., the first antenna 691) supporting a first frequency range and a second antenna (e.g., the second antenna 692) supporting a second frequency range and a third frequency range, the first diplexer port of the single chip may be connected to the first antenna, and the second antenna may be connected to the second diplexer port of the single chip. Through the single chip, signal processing of all frequency bands of the first frequency range, the second frequency range, and the third frequency range may be supported. In addition, as a non-limiting example, an antenna may be connected to an antenna port directly connected to an antenna switching module instead of a diplexer port to which a diplexer of the RFFE module is connected. Through this, a chip corresponding to the RFFE module according to embodiments of the present disclosure may be universally used for an electronic device having various antennas by including an additional diplexer port in addition to an antenna port.

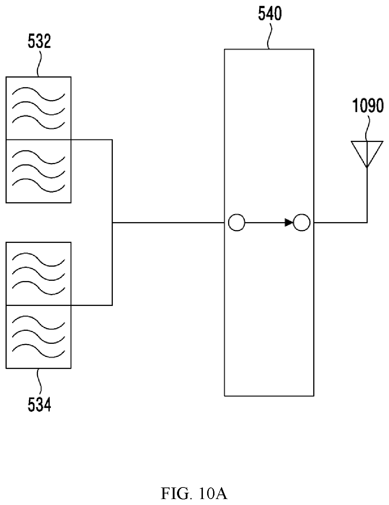

FIGS. 10A to 10C illustrate examples of antenna switching circuitry for carrier aggregation (CA).

Referring to FIG. 10A, the electronic device 101 may include second filter circuitry 532 for a second frequency band 332 and fourth filter circuitry 534 for a fourth frequency band 334. The electronic device 101 may include an antenna 1090. The antenna 1090 may support both the second frequency band 332 and the fourth frequency band 334. In order to connect the second filter circuitry 532 and the fourth filter circuitry 534 to antenna switching circuitry 540, a quadplexer in which the second filter circuitry 532 and the fourth filter circuitry 534 are implemented as one may be used.

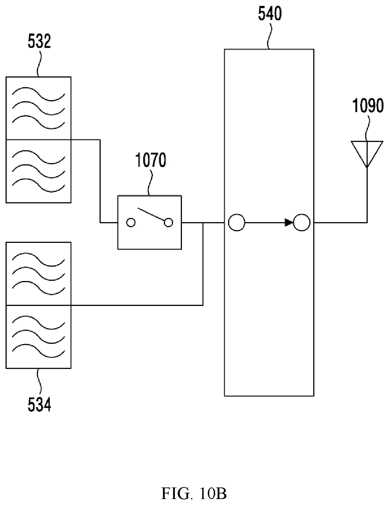

Referring to FIG. 10B, the electronic device 101 may include second filter circuitry 532 for a second frequency band 332 and fourth filter circuitry 534 for a fourth frequency band 334. The electronic device 101 may include an antenna 1090. The antenna 1090 may support both the second frequency band 332 and the fourth frequency band 334. In order to connect the second filter circuitry 532 to antenna switching circuitry 540, a switch 1070 may be used. The switch 1070 may be connected to a port of the second filter circuitry 532.

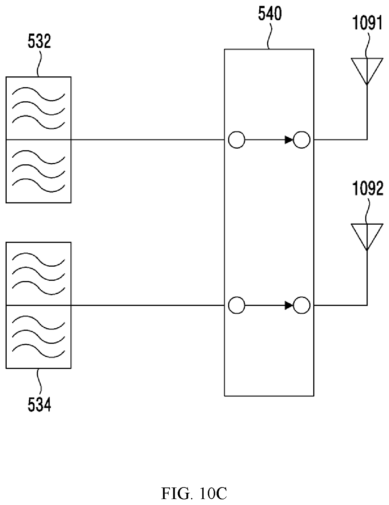

Referring to FIG. 10C, the electronic device 101 may include second filter circuitry 532 for a second frequency band 332 and fourth filter circuitry 534 for a fourth frequency band 334. The electronic device 101 may include a first antenna 1091 and a second antenna 1092.

As described in FIG. 10A or FIG. 10B, if duplexers using the quadplexer or the switch 1070 are used, the electronic device 101 may be in a multi-loading state. Even if a signal is transmitted through one frequency band (e.g., the second frequency band 332), insertion loss may increase due to components (e.g., the fourth filter circuitry 534 for the fourth frequency band 334) for another frequency band. In a case that carrier aggregation (CA) is configured in the same frequency range (e.g., the second frequency range 322), the electronic device 101 may control the antenna switching circuitry 540 to independently connect an antenna to each filter circuitry for a corresponding frequency band. For example, the electronic device 101 may control the antenna switching circuitry 540 such that the first antenna 1091 is connected to a signal path for the second frequency band 332 and the second antenna 1091 is connected to a signal path for the fourth frequency band 334.

As mentioned through the above-described embodiments, an RFFE module (e.g., the RFFE module 230) for all of a low-band, a mid-band, and a high-band may include diplexers. As the RFFE module for all of the low-band, the mid-band, and the high-band is used, an LPF due to a disposition of a separate diplexer may be omitted in the RFFE module. If an RFFE module supporting the low-band and the mid-band and an RFFE module supporting the high-band are separately provided and the two RFFE modules are connected to one antenna through a diplexer, an LPF for mitigating or removing harmonic components of signals is required in each RFFE module. However, through the RFFE module according to embodiments of the present disclosure, the LPF due to such an external diplexer may be omitted. In addition, as a diplexer is implemented in one RFFE module, impedance matching circuitry or a separate feedline is not required at each of an input and an output of an external diplexer, and thus spatial efficiency may be improved and path loss may be reduced. Through the RFFE module, mounting efficiency in a limited space, reduction in path loss due to reduction in feedlines, and RF transmission/reception performance may be improved.

The effects that may be obtained from the present disclosure are not limited to those described above, and any other effects not mentioned herein will be clearly understood by those having ordinary knowledge in the art to which the present disclosure belongs, from the following description.

In embodiments of the present disclosure, an electronic device 101 is provided. The electronic device 101 may comprise a processor 210 comprising processing circuitry, a radio frequency (RF) transceiver 220 connected to the processor 210, a radio frequency front end (RFFE) module 230 connected to the RF transceiver 220, and a plurality of antennas including a first antenna and a second antenna connected to the RFFE module 230. The RFFE module 230 may include a first power amplifier 511 for a first frequency range 321, a second power amplifier 512 for a second frequency range 322 higher than the first frequency range 321, a third power amplifier 513 for a third frequency range 323 higher than the second frequency range 322, a first signal path connected to the first power amplifier 511 and including first filter circuitry 531 for a first frequency band 331 in the first frequency range 321, a second signal path connected to the second power amplifier 512 and including second filter circuitry 532 for a second frequency band 332 in the second frequency range 322, a third signal path connected to the third power amplifier 513 and including third filter circuitry 533 for a third frequency band 333 in the third frequency range 323, antenna switching circuitry 540 connected to the first signal path, the second signal path, and the third signal path, a first diplexer 561 connected to the antenna switching circuitry 540 and for separating signals in the first frequency range 321 and signals in the second frequency range 322, and a second diplexer 562 connected to the antenna switching circuitry 540 and for separating signals in the second frequency range 322 and signals in the third frequency range 323.

In embodiments of the present disclosure, an electronic device 101 is provided. The electronic device 101 may comprise a processor 210 comprising processing circuitry, a radio frequency (RF) transceiver 220 connected to the processor 210, a radio frequency front end (RFFE) module 230 connected to the RF transceiver 220, and a plurality of antennas including a first antenna and a second antenna connected to the RFFE module 230. The RFFE module 230 may include a first power amplifier 511 for a first frequency range 321, a second power amplifier 512 for a second frequency range 322 higher than the first frequency range 321, a third power amplifier 513 for a third frequency range 323 higher than the second frequency range 322, a first signal path connected to the first power amplifier 511 and including first filter circuitry 531 for a first frequency band 331 in the first frequency range 321, a second signal path connected to the second power amplifier 512 and including second filter circuitry 532 for a second frequency band 332 in the second frequency range 322, a third signal path connected to the third power amplifier 513 and including third filter circuitry 533 for a third frequency band 333 in the third frequency range 323, antenna switching circuitry 540 connected to the first signal path, the second signal path, and the third signal path, a first diplexer 561 connected to the antenna switching circuitry 540, and a second diplexer 562 connected to the antenna switching circuitry 540. The first diplexer 561 may comprise a first filter configured to pass signals in the first frequency range 321 and a second filter configured to pass signals in the second frequency range 322. The second diplexer 562 may comprise a third filter configured to pass signals in the second frequency range 322 and a fourth filter configured to pass signals in the third frequency range 323.

For example, the first diplexer 561 may be electrically connected to the first antenna. The second diplexer 562 may be electrically connected to the second antenna. The antenna switching circuitry 540 may be configured to connect the first signal path and one end of the first diplexer 561 electrically, connect the second signal path and another end of the first diplexer 561 electrically, and connect the third signal path and one end of the second diplexer 562 electrically.

For example, the first diplexer 561 may be electrically connected to the first antenna. The second diplexer 562 may be electrically connected to the second antenna. The antenna switching circuitry 540 may be configured to connect the first signal path and one end of the first diplexer 561 electrically, and connect the second signal path and one end of the second diplexer 562 electrically and connect the third signal path and another end of the second diplexer 562 electrically.

For example, the first diplexer 561 may be electrically connected to the first antenna. The antenna switching circuitry 540 may be configured to connect the first signal path and one end of the first diplexer 561 electrically, connect the second signal path and another end of the first diplexer 561 electrically, and connect the third signal path and an output port of the RFFE module 230, which is connected to the second antenna, electrically.

For example, the second diplexer 562 may be electrically connected to the second antenna. The antenna switching circuitry 540 may be configured to connect the first signal path and an output port of the RFFE module 230, which is connected to the first antenna, electrically, connect the second signal path and one end of the second diplexer 562 electrically, and connect the third signal path and another end of the second diplexer 562 electrically.

For example, the first diplexer 561 may be electrically connected to the first antenna. The second diplexer 562 may be electrically connected to the second antenna. The antenna switching circuitry 540 may be configured to connect the first signal path and one end of the first diplexer 561 electrically, connect, electrically, the second signal path to another end of the first diplexer 561 or one end of the second diplexer 562 selectively, and connect the third signal path and another end of the second diplexer 562 electrically.

For example, the processor 210 may be configured to control the antenna switching circuitry 540, through the RF transceiver 220, to obtain a first signal quality in the second frequency band 332 through the first antenna, obtain a second signal quality in the second frequency band 332 through the second antenna, and, based on a comparison result of the first signal quality and the second signal quality, connect the second signal path electrically to one of the first diplexer 561 and the second diplexer 562 selectively.

For example, the RFFE module 230 may further include a fourth signal path connected to the second power amplifier 512 and including fourth filter circuitry 534 for a fourth frequency band 334 in the second frequency range 322. The processor 210 may be configured to control the antenna switching circuitry 540, through the RF transceiver 220, to, in a case that carrier aggregation (CA) is configured for the second frequency band 332 and the fourth frequency band 334, connect the second signal path and the first antenna electrically and connect the fourth signal path to the second antenna electrically.

For example, the electronic device 101 may comprise a metal frame including a plurality of conductive portions. The plurality of conductive portions may include a first conductive portion used as a radiator of the first antenna and a second conductive portion used as a radiator of the second antenna.

For example, the first frequency range 321 may include frequency bands which are lower than 1 GHz. The second frequency range 322 may include frequency bands which are higher than or equal to 1 GHz and lower than 2.3 GHz. The third frequency range 323 may include frequency bands which are higher than or equal to 2.3 GHz.

For example, the first diplexer 561 may have a first port, a second port, and a third port. The first port of the first diplexer 561 and the second port of the first diplexer 561 may be connected to the antenna switching circuitry 540. The second diplexer 562 may have a first port, a second port, and a third port. The first port of the second diplexer 562 and the second port of the second diplexer 562 may be connected to the antenna switching circuitry 540. The RFFE module 230 may include a first diplexer 561 port connected to the third port of the first diplexer 561, a second diplexer 562 port connected to the second diplexer 562, a first antenna port connected to a feedline from a first throw of the antenna switching circuitry 540, and a second antenna port connected to a feedline from a second throw of the antenna switching circuitry 540.

For example, each of the first diplexer 561 and the second diplexer 562 may be used to attenuate harmonic frequency components.

For example, the RFFE module 230 may include a first low noise amplifier electrically connected to the first filter circuitry 531 for the first frequency band 331, a second low noise amplifier electrically connected to the second filter circuitry 532 for the second frequency band 332, and a third low noise amplifier electrically connected to the third filter circuitry 533 for the third frequency band 333.

For example, the RFFE module 230 may include a first transmission switch configured to connect the first power amplifier 511 electrically to one of one or more filter circuitries corresponding to one or more frequency bands of the first frequency range 321 selectively, a second transmission switch configured to connect the second power amplifier 512 electrically to one of one or more filter circuitries corresponding to one or more frequency bands of the second frequency range 322 selectively, and a third transmission switch configured to connect the third power amplifier 513 electrically to one of one or more filter circuitries corresponding to one or more frequency bands of the third frequency range 323 selectively.

In embodiments of the present disclosure, a radio frequency front end (RFFE) module 230 is provided. The RFFE module 230 may comprise a first power amplifier 511 for a first frequency range 321, a second power amplifier 512 for a second frequency range 322 higher than the first frequency range 321, a third power amplifier 513 for a third frequency range 323 higher than the second frequency range 322, a first signal path connected to the first power amplifier 511 and including first filter circuitry 531 for a first frequency band 331 in the first frequency range 321, a second signal path connected to the second power amplifier 512 and including second filter circuitry 532 for a second frequency band 332 in the second frequency range 322, a third signal path connected to the third power amplifier 513 and including third filter circuitry 533 for a third frequency band 333 in the third frequency range 323, antenna switching circuitry 540 connected to the first signal path, the second signal path, and the third signal path, a first diplexer 561 connected to the antenna switching circuitry 540, and a second diplexer 562 connected to the antenna switching circuitry 540. The first diplexer 561 may comprise a first filter configured to pass signals in the first frequency range 321 and a second filter configured to pass signals in the second frequency range 322. The second diplexer 562 may comprise a third filter configured to pass signals in the second frequency range 322 and a fourth filter configured to pass signals in the third frequency range 323.

For example, the RFFE module 230 may include a first transmission switch configured to connect the first power amplifier 511 electrically to one of one or more filter circuitries corresponding to one or more frequency bands of the first frequency range 321 selectively, a second transmission switch configured to connect the second power amplifier 512 electrically to one of one or more filter circuitries corresponding to one or more frequency bands of the second frequency range 322 selectively, and a third transmission switch configured to connect the third power amplifier 513 electrically to one of one or more filter circuitries corresponding to one or more frequency bands of the third frequency range 323 selectively.

For example, the first frequency range 321 may include frequency bands which are lower than 1 GHz. The second frequency range 322 may include frequency bands which are higher than or equal to 1 GHz and lower than 2.3 GHz. The third frequency range 323 may include frequency bands which are higher than or equal to 2.3 GHz.

For example, the first diplexer 561 may have a first port, a second port, and a third port. The first port of the first diplexer 561 and the second port of the first diplexer 561 may be connected to the antenna switching circuitry 540. The second diplexer 562 may have a first port, a second port, and a third port. The first port of the second diplexer 562 and the second port of the second diplexer 562 may be connected to the antenna switching circuitry 540. The RFFE module 230 may include a first diplexer 561 port connected to the third port of the first diplexer 561, a second diplexer 562 port connected to the third port of the second diplexer 562, a first antenna port connected to a feedline from a first throw of the antenna switching circuitry 540, and a second antenna port connected to a feedline from a second throw of the antenna switching circuitry 540.

For example, the RFFE module 230 may include a first low noise amplifier electrically connected to the first filter circuitry 531 for the first frequency band 331, a second low noise amplifier electrically connected to the second filter circuitry 532 for the second frequency band 332, and a third low noise amplifier electrically connected to the third filter circuitry 533 for the third frequency band 333.

For example, the RFFE module 230 may include a fourth signal path connected to the second power amplifier 512 and including fourth filter circuitry 534 for a fourth frequency band 334 in the second frequency range 322. The second frequency band 332 and the fourth frequency band 334 may correspond to a band combination for carrier aggregation (CA).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor comprising processing circuitry;
a radio frequency (RF) transceiver connected to the processor;
a radio frequency front end (RFFE) module connected to the RF transceiver; and
a plurality of antennas including a first antenna and a second antenna connected to the RFFE module,
wherein the RFFE module includes:
a first power amplifier for a first frequency range;
a second power amplifier for a second frequency range higher than the first frequency range;
a third power amplifier for a third frequency range higher than the second frequency range;
a first signal path connected to the first power amplifier and including first filter circuitry for a first frequency band in the first frequency range;
a second signal path connected to the second power amplifier and including second filter circuitry for a second frequency band in the second frequency range;
a third signal path connected to the third power amplifier and including third filter circuitry for a third frequency band in the third frequency range;
antenna switching circuitry connected to the first signal path, the second signal path, and the third signal path;
a first diplexer, connected to the antenna switching circuitry, comprising a first filter configured to pass signals in the first frequency range and a second filter configured to pass signals in the second frequency range; and
a second diplexer, connected to the antenna switching circuitry, comprising a third filter configured to pass signals in the second frequency range and a fourth filter configured to pass signals in the third frequency range.

2. The electronic device of claim 1,
wherein the first diplexer is electrically connected to the first antenna,
wherein the second diplexer is electrically connected to the second antenna, and
wherein the antenna switching circuitry is configured to:
connect the first signal path and one end of the first diplexer electrically and connect the second signal path and another end of the first diplexer electrically, and
connect the third signal path and one end of the second diplexer electrically.

3. The electronic device of claim 1,
wherein the first diplexer is electrically connected to the first antenna,
wherein the second diplexer is electrically connected to the second antenna, and
wherein the antenna switching circuitry is configured to:
connect the first signal path and one end of the first diplexer electrically, and
connect the second signal path and one end of the second diplexer electrically and connect the third signal path and another end of the second diplexer electrically.

4. The electronic device of claim 1,
wherein the first diplexer is electrically connected to the first antenna, and
wherein the antenna switching circuitry is configured to:
connect the first signal path and one end of the first diplexer electrically and connect the second signal path and another end of the first diplexer electrically, and
connect the third signal path and an output port of the RFFE module, which is connected to the second antenna, electrically.

5. The electronic device of claim 1,
wherein the second diplexer is electrically connected to the second antenna, and
wherein the antenna switching circuitry is configured to:
connect the first signal path and an output port of the RFFE module, which is connected to the first antenna, electrically, and
connect the second signal path and one end of the second diplexer electrically and connect the third signal path and another end of the second diplexer electrically.

6. The electronic device of claim 1,
wherein the first diplexer is electrically connected to the first antenna,
wherein the second diplexer is electrically connected to the second antenna, and
wherein the antenna switching circuitry is configured to:
connect the first signal path and one end of the first diplexer electrically,
connect, electrically, the second signal path to another end of the first diplexer or one end of the second diplexer selectively, and
connect the third signal path and another end of the second diplexer electrically.

7. The electronic device of claim 6,
wherein the processor is configured to control the antenna switching circuitry, through the RF transceiver, to:
obtain a first signal quality in the second frequency band through the first antenna,
obtain a second signal quality in the second frequency band through the second antenna, and
based on a comparison result of the first signal quality and the second signal quality, connect the second signal path electrically to one of the first diplexer and the second diplexer selectively.

8. The electronic device of claim 1,
wherein the RFFE module further includes a fourth signal path connected to the second power amplifier and including fourth filter circuitry for a fourth frequency band in the second frequency range, and
wherein the processor is configured to control the antenna switching circuitry, through the RF transceiver, to, in a case that carrier aggregation (CA) is configured for the second frequency band and the fourth frequency band, connect the second signal path to the first antenna electrically and connect the fourth signal path to the second antenna electrically.

9. The electronic device of claim 1, comprising:
a metal frame including a plurality of conductive portions,
wherein the plurality of conductive portions include a first conductive portion used as a radiator of the first antenna and a second conductive portion used as a radiator of the second antenna.

10. The electronic device of claim 1,
wherein the first frequency range includes frequency bands which are lower than 1 gigahertz (GHz),
wherein the second frequency range includes frequency bands which are higher than or equal to 1 GHz and lower than 2.3 GHz, and
wherein the third frequency range includes frequency bands which are higher than or equal to 2.3 GHz.

11. The electronic device of claim 1,
wherein the first diplexer has a first port, a second port, and a third port,
wherein the first port of the first diplexer and the second port of the first diplexer are connected to the antenna switching circuitry,
wherein the second diplexer has a first port, a second port, and a third port,
wherein the first port of the second diplexer and the second port of the second diplexer are connected to the antenna switching circuitry, and
wherein the RFFE module includes:
a first diplexer port connected to the third port of the first diplexer,
a second diplexer port connected to the third port of the second diplexer,
a first antenna port connected to a feedline from a first throw of the antenna switching circuitry, and
a second antenna port connected to a feedline from a second throw of the antenna switching circuitry.

12. The electronic device of claim 1, wherein each of the first diplexer and the second diplexer is used to attenuate harmonic frequency components.

13. The electronic device of claim 1, wherein the RFFE module includes:
a first low noise amplifier electrically connected to the first filter circuitry for the first frequency band,
a second low noise amplifier electrically connected to the second filter circuitry for the second frequency band, and
a third low noise amplifier electrically connected to the third filter circuitry for the third frequency band.

14. The electronic device of claim 1, wherein the RFFE module includes:
a first transmission switch configured to connect the first power amplifier electrically to one of one or more filter circuitries corresponding to one or more frequency bands of the first frequency range selectively,
a second transmission switch configured to connect the second power amplifier electrically to one of one or more filter circuitries corresponding to one or more frequency bands of the second frequency range selectively, and
a third transmission switch configured to connect the third power amplifier electrically to one of one or more filter circuitries corresponding to one or more frequency bands of the third frequency range selectively.

15. A radio frequency front end (RFFE) module comprising:
a first power amplifier for a first frequency range;
a second power amplifier for a second frequency range higher than the first frequency range;
a third power amplifier for a third frequency range higher than the second frequency range;
a first signal path connected to the first power amplifier and including first filter circuitry for a first frequency band in the first frequency range;
a second signal path connected to the second power amplifier and including second filter circuitry for a second frequency band in the second frequency range;
a third signal path connected to the third power amplifier and including third filter circuitry for a third frequency band in the third frequency range;
antenna switching circuitry connected to the first signal path, the second signal path, and the third signal path;
a first diplexer, connected to the antenna switching circuitry, comprising a first filter configured to pass signals in the first frequency range and a second filter configured to pass signals in the second frequency range; and
a second diplexer, connected to the antenna switching circuitry, comprising a third filter configured to pass signals in the second frequency range and a fourth filter configured to pass signals in the third frequency range.
